# EUROPEAN PATENT SPECIFICATION

(11) **EP 0 616 562 B1**
(45) Date of publication and mention of the grant of the patent: **22.09.1999**
(21) Application number: 92924767.4
(22) Date of filing: 30.11.1992
(51) Int. Cl.: B23K 35/36, B23K 35/22

(54) **SOLDER PASTE FORMULATIONS FOR USE IN THE ELECTRONICS INDUSTRY**
WEICHLOTPASTENZUSAMMENSETZUNGEN ZUR VERWENDUNG IN DER ELEKTONIKINDUSTRIE
FORMULATIONS DE PATE A BRASER DESTINEES A L'INDUSTRIE ELECTRONIQUE

(30) Priority: 13.12.1991 GB 9126498
(43) Date of publication of application: 28.09.1994
(73) Proprietor: COOKSON GROUP plc, London WC2N 6HJ (GB)
(72) Inventor: PATERSON, Geoffrey Andrew, Oxford OX5 2JZ (GB); KING, Charles Edmund, Kidlingdon, Oxford OX5 1EH (GB); MACKIE, Andrew Christopher, King's Lynn, Norfolk PE31 7HA (GB)
(74) Representative: Allard, Susan Joyce
(86) International application number: GB9202214
(87) International publication number: WO9311905

(56) References cited:
- EP-A- 0 140 344
- EP-A- 0 413 540
- GB-A- 1 521 132
- GB-A- 2 198 676
- US-A- 4 342 607
- CHEMICAL ABSTRACTS, vol. 115, no. 26 Columbus, Ohio, US; abstract no. 285256r,

## Description

The present invention relates to paste formulations for use in the electronics industry and, in particular, to solder paste or cream formulations in which an emulsion of two or more immiscible organic liquids is used as a vehicle for a suitable solder powder.

Vehicles which are commonly used in the preparation of solder creams or pastes for the electronics industry may contain a volatile solvent, a thickener/binder, a rheological modifier to enhance thixotropy or pseudoplasticity, a surfactant and usually an activating agent which may be an amine or amine hydrohalide, an organic acid(s) or similarly suitable reducing or chelating agents. The level of organic solids to provide the necessary rheology to support solder powder and to enable screen or stencil printing is normally about 40wt% up to 80wt% based on the weight of the vehicle which comprises between 7wt% and 15wt% of the solder paste formulation. The materials used are either polymeric, such as ethyl cellulose or derivatives thereof, polyamides or castor oil derivatives which provide relevent rheological characteristics for electronics use, for example screen or stencil printing. Rosin and derivatives thereof may be used in the vehicle in the range 20wt% to 80wt%.

In microelectronic processing several difficulties are found with present day solder paste systems. The high level and the nature of the organic solids used to provide the required rheology often leads to a high temperature coefficient of viscosity for the flux and solder paste. Minor increases in temperature therefore can lead to a severe drop in viscosity which may lead to deterioration in printing and poor slump characteristics. In the automated manufacture and electrical testing of printed circuit boards (pcb's), large levels of organic residues typically 4.5wt% to 7.5wt% on the solder paste, can interfere with automatic electrical probe testing of a board and so complex and expensive cleaning operations need to be carried out to remove these residues.

Because of the disadvantages highlighted above, we have found a way of making a vehicle, for which we can tailor the rheology, which when formulated as a solder paste or cream and reflowed yields low organic residues, typically less than 2.5wt% based on a solder paste or cream containing at least 90% by weight of solder powder, when reflowed at a temperature in the range of up to 270°, preferably less than 1.6wt%. At such low residual solids content there is minimal interference wit the automatic electrical probe testing of soldered joints and the residues are barely visible to the naked eye and are therefore visually acceptable to the production engineer.

Accordingly, the present invention provides a stable solder paste or cream for use in the electronics industry which comprises:
i) a nonagueous vehicle; and
ii) a solder powder filler material,
characterized in that the vehicle is an emulsion of two or more immiscible organic liquids of at least 60vol% disperse phase, one of which liquids is a polar organic solvent, or a mixture thereof, and the other of which liquids is an aliphatic hydrocarbon, or a mixture thereof, and in that the solder paste or cream mixture, when reflowed at a temperature in the range of up to 270°C, yields less than 2.5 wt% organic residues based on the weight of the solder paste or cream.

The vehicle comprises two or more immiscible organic liquids, which have a viscosity at STP of less than 1000 mPa s, one of which is a polar organic solvent(s), such as a glycol and the other of which is typically an apolar hydrocarbon, for example a mineral oil. The polar phase may be either the disperse phase or the continuous phase. Mixtures of polar organic solvents or aliphatic hydrocarbons may be used, as appropriate. Preferably both the polar organic solvent, or mixture thereof, and the aliphatic hydrocarbon, or mixture thereof will have a boiling point greater than 100°C.

An emulsifier is generally required to form the emulsion from the immiscible liquids and generally will be present in an amount of from 0.2 to 10wt%, based on the total weight of the vehicle. Suitable emulsifiers are poly(oxyalkylene)alkyl ethers, amine derivatives of oligomeric polyesters, a polymeric surfactant or similar compounds.

The vehicle may additionally contain a co-solvent, which is included in order to improve interfacial surface tension parameters, in an amount of up to 20vol%. A suitable co-solvent is a C₁-C₁₀, chain length, aliphatic alcohol.

The vehicle may additionally include a thickener, although thickening is provided by the highly stressed emulsion. When a thickener is used it should be chosen so as to be compatible with the continuous phase in an amount of up to 60wt%, preferably 0.5 to 50wt%. Suitable thickeners include polyacrylic acid or polyamides or resins for the polar fraction and hydrogenated castor oil, aliphatic and non polar resins for the aliphatic fraction. The viscosity of the continuous phase is increased by the inclusion of a thickener and this enables the rheological characteristics of the vehicle to be adapted as required.

The continuous phase, if it is apolar, typically comprises no more than 40wt% of the vehicle system and preferably between 18wt% and 35wt% of the vehicle system. The organic liquids which are used in the vehicle of the prsent invention preferably are of relative density 0.74< σ <1.1 and the volume ratio of the continuous phase to the disperse phase is preferably in the range of from 20:80 to 40:60. Within these parameters the emulsion is severely stressed which leads to surprising and beneficial rheological effects. In particular, solder pastes as formulated with the vehicle of the present invention show excellent hot slump resistance and a surprising degree of temperature invariance of viscosity from 20°C to approximately 35°C. It may also be necessary for further components to be added to the vehicle to provide, for instance, fluxing activity for solder reflow. Typical fluxing additives, familiar to those skilled in the art, may be used so long as these additives do not deleteriously affect the vehicle emulsion stability. By stability it is meant that a vehicle formulated as described will remain as a homogeneous emulsion with no marked separation over a period of at least one month, preferably over a period of at least 6 months. Activators used in the preparation of the solder paste or creams will be included in the amounts of up to 7wt%.

The vehicle as described will form a stable cream or paste when blended with suitably sized solder powder material and may be conveyed to a substrate by a variety of processing techniques used in hybrid microelectronics and pcb manufacture, for example, by screen or stencil printing, dispensing or dipping. The particular application technique will depend upon the nature of the article being produced. By stable we mean that a solder paste or cream will not substantially bleed or separate over a period of one month, preferably over a period of at least 6 months, and is readily recovered to a homogeneous paste or cream by gentle stirring. It has been found that some relatively unstable emulsion vehicles gain substantially more stability when blended with solder powder.

The solder powder used in the present invention may be an alloy of tin or lead or bismuth or silver or indium or antimony or any combination thereof. Examples of suitable solder powder alloy compositions are SnPb such as 63Sn:37Pb, SnPbBi, SnBi etc. of a particle size less than 80 micrometres, preferably 20-45 micrometres, may be used to form solder pastes or creams of the present invention.

The ratio of the emulsion vehicle to the solder powder will depend upon various factors including the particle size/morphology of the solder powder and the intended use of the paste. Generally, however, a greater quantity of the emulsion vehicle will be required for the production of solder pastes or creams containing fine particulate material having an average particle size of up to about 5 micrometres. Present day solder pastes, however, are usually prepared from particulate material having an average particle size in excess of 10 micrometres, preferably 20-45 micrometres particle size.

The solder pastes or creams of the present invention contain substantially lower levels of organic solids than those systems conventionally used.

Solder pastes or creams made with an emulsion vehicle as described herein, are reflowable using e.g. vapour phase systems or infra-red reflow and are reflowable in either nitrogen or other inert atmospheres. Since the organic residues are less than 2.5wt% they may be left on the printed circuit board without the need for cleaning.

The emulsion vehicle with an apolar continuous phase, will contain between 15vol% and 40vol%, more preferably 18vol% to 35vol%, single hydrocarbon or mixture of hydrocarbons of boiling range greater than 175°C, and between 60vol% and 85vol%, more preferably 65vol% to 82vol% polar organic solvent such as glycol or a glycol containing mixture of similar boiling range.

The emulsion vehicle used in the present invention may be made by mixing the immiscible organic liquids together in the presence of an emulsifier. The interfacial surface tension is such that an emulsion readily forms with gentle agitation of the solution mixture and, if necessary, gentle heating. Additional chemicals may be added after, or prior to emulsification. The solder paste or cream may be formed by blending the required amount of solder powder of the desired particle size with the emulsion vehicle.

The present invention will be further described with reference to the following Examples which are illustrative of the invention and are not to be taken as limiting of its scope.

### Example 1

An emulsion vehicle was prepared from the following components:

| | |
|---|---|
| Dipropylene glycol | 42.75g |
| Hercules Resin B106 | 2.25g |
| Hypermer KD3 | 0.75g |
| Adipic acid | 2.25g |
| Hercures C Resin | 7.5g |
| Polyisobutylene | 0.05g |
| Shellsol D90 | 7.45g |

The above materials were mixed together, with heating to approximately 40°C, to produce a viscous emulsion vehicle. The volume ratio of the polar disperse phase to the apolar continuous phase was 71.23:28.77. The emulsion vehicle remained stable for a few months. 7.5 parts by weight of the emulsion vehicle was mixed with 92.5 parts by weight of a solder powder (63.37 tin: lead w:w) of size range 25-45µm. A screen-printable solder paste was formed which remained stable for 6 months. When reflowed in a nitrogen atmosphere this solder paste gave an organics residue of 1.6wt% residues on the test board.

### Example 2

An emulsion vehicle was prepared from the following components:

| | |
|---|---|
| Dipropylene glycol | 22.58g |
| Propylene glycol | 22.58g |
| Hypermer KD3 | 0.75g |
| Hypermer 261 | 0.75g |
| Adipic acid | 1.83g |
| Hercures C Resin | 7.5g |
| Polyisobutylene | 0.05g |
| Shellsol D90 | 7.45g |

The above materials were mixed together, with heating to approximately 40°C, to produce a viscous emulsion vehicle. The volume ratio of the polar disperse phase to the apolar continuous phase was 70.14:29.86. The emulsion vehicle remained stable for 6 months. 8.0 parts by weight of the emulsion vehicle was mixed with 92.0 parts by weight of a solder powder (63:37 tin:lead w:w) of size range 25-45µm. A screen-printable solder paste was formed which remained stable for 6 months. When reflowed in a nitrogen atmosphere this solder paste gave an organics residue of 1.4wt% residues on the test board.

## Claims

1. A stable solder paste or cream for use in the electronics industry which comprises:
i) a nonaqueous vehicle; and
ii) a solder powder filler material,
characterized in that the vehicle is an emulsion of two or more immiscible organic liquids of at least 60vol% disperse phase, one of which liquids is a polar organic solvent, or a mixture thereof, and the other of which liquids is an aliphatic hydrocarbon, or a mixture thereof, and in that the solder paste or cream mixture, when reflowed at a temperature in the range of up to 270°C, yields less than 2.5 wt% organic residues based on the weight of the solder paste or cream.

2. A solder paste or cream as claimed in claim 1 wherein the polar organic solvent is a glycol.

3. A solder paste or cream as claimed in claim 1 or claim 2 wherein the aliphatic hydrocarbon is a mineral oil.

4. A solder paste or cream as claimed in any one of the preceding claims wherein the continuous phase volume fraction of the emulsion is in the range of from 18 to 35 vol%.

5. A solder paste or cream as claimed in any one of the preceding claims wherein an activator is included in an amount of up to 7wt%.

6. A solder paste as claimed in any one of the preceding claims wherein the polar solvent, or mixture thereof, and the aliphatic hydrocarbon, or mixture thereof, each has a lower boiling point of >100°C.

7. A solder paste or cream as claimed in any one of the the preceding claims wherein the vehicle contains 0.2 to 10wt%, based on the total weight thereof, of one or more emulsifier.

8. A paste as claimed in claim 7 wherein the emulsifier is a poly(oxyalkylene)alkyl ether, an amine derivative of an oligomeric polyester or a polymeric surfactant.

9. A solder paste or cream as claimed in any one of the preceding claims wherein the vehicle includes a co-solvent in an amount of up to 20vol%.

10. A solder paste or cream as claimed in any one of the preceding claims wherein the vehicle includes a thickening agent in the continuous phase in an amount of up to 60wt%.

11. A solder paste or cream as claimed in any one of the preceding claims wherein the solder powder is an alloy of tin or lead or bismuth or silver or indium or antimony or any combination thereof.

12. A solder paste or cream as claimed in any one of the preceding claims which displays less than a 10% spread due to hot slumping at a temperature in the range of up to 150°C.

13. A solder paste or cream as claimed in any one of the preceding claims which displays less than a 32% variation in viscosity over the temperature range 22°C to 32°C.

14. A solder paste or cream as claimed in any one of the preceding claims which is stable for at least one month.

15. A printed circuit board which has been prepared using a solder paste or cream as claimed in any one of the preceding claims.

## Patentansprüche

1. Eine stabile Lotpaste oder -brei zur Verwendung in der Elektronikindustrie mit:
i) eine nichtwässrigen Träger, und
ii) einem Lötpulverfüllmaterial,
dadurch gekennzeichnet, dass der Träger eine Emulsion von zwei oder mehreren nicht mischbaren organischen Flüssigkeiten von wenigstens 60 Vol.-% in disperser Phase aufweist, wobei eine der Flüssigkeiten ein polares organisches Lösungsmittel oder eine Mischung aus solchen ist, und wobei die andere Flüssigkeit ein aliphatischer Kohlenwasserstoff oder eine Mischung aus solchen ist, und dass die Lötpaste oder die Breimischung, wenn sie bei einer Temperatur im Bereich von bis zu 270°C wieder geschmolzen wird, weniger als 2,5 Gewichtsprozent organische Reste auf der Basis des Gewichts der Lötpaste oder des Breis abgibt.

2. Lötpaste oder Brei nach Anspruch 1, bei dem das polare organische Lösungsmittel ein Glykol ist.

3. Lötpaste oder Brei nach Anspruch 1 oder 2, bei dem der aliphatische Kohlenwasserstoff ein Mineralöl ist.

4. Lötpaste oder Brei nach einem der vorhergehenden Ansprüche, bei der die durchgängige Phase des Volumenanteils der Emulsion in dem Bereich von 18 bis 35 Vol.-% liegt.

5. Lötpaste oder Brei nach einem der vorhergehenden Ansprüche, die einen Aktivator in einer Menge von bis zu 7 Gew.-% enthält.

6. Lötpaste nach einem der vorhergehenden Ansprüche, bei der das polare Lösungsmittel oder die Mischung aus solchen und der aliphatische Kohlenwasserstoff oder die Mischung aus solchen jeweils einen Siedepunkt unterhalb 100°C aufweist.

7. Lötpaste oder Brei nach einem der vorhergehenden Ansprüche, bei der der Träger einen oder mehrere Emulgatoren in einem Anteil von 0,2 bis 10 Gew.-% des Gesamtgewichts enthält.

8. Paste nach Anspruch 7, bei der der Emulgator ein Polyoxyalkylin-Alkyl-Äther, ein Aminderivate oder ein olygomerischer Polyester oder ein polymerischer oberflächenaktiver Stoff ist.

9. Lötpaste oder Brei nach eine der vorherigen Ansprüche, bei der der Träger ein Verschnittmittel in einer Menge von bis zu 20 Vol.-% enthält.

10. Lötpaste oder Brei nach einem der vorausgehenden Ansprüche, bei der der Träger ein Verdickungsmittel in einer kontinuierlichen Phase in einer Menge von bis zu 60 Gew.-% enthält.

11. Lötpaste oder Brei nach einem der vorhergehenden Ansprüche, bei der das Lötpulver eine Legierung aus Zinn, Blei, Bismut, Silber, Indium, Antimon oder irgendeine Kombination aus diesen ist.

12. Lötpaste oder Brei nach einem der vorhergehenden Ansprüche, die weniger als 10% Schwankungsbreite infolge von Heißverrutschung bei einer Temperatur im Bereich von 150°C aufweist.

13. Lötpaste oder Brei nach einem der vorausgehenden Ansprüche, die weniger als 32% Variation der Viskosität in dem Temperaturbereich von 22°C bis 32°C zeigt.

14. Lötpaste oder Brei nach einem der vorausgehenden Ansprüche, die wenigstens für einen Monat stabil ist.

15. Gedruckte Leiterplatte, die unter Verwendung einer Lötpaste oder eines Breis hergestellt worden ist, wie sie bzw. er in einem der vorausgehenden Ansprüche beansprucht ist.

## Revendications

1. Pâte ou crème de soudure stable à utiliser dans l'industrie électronique, qui comprend :
i) un véhicule non aqueux ; et
ii) une matière de charge consistant en poudre de soudure,
caractérisée en ce que le véhicule est une émulsion d'au moins deux liquides organiques non miscibles comprenant au moins 60 % en volume de phase dispersée, l'un des liquides est un solvant organique polaire, ou un mélange de tels solvants, et l'autre liquide est un hydrocarbure aliphatique, ou un mélange de tels hydrocarbures, et en ce que le mélange de pâte ou crème de soudure, lorsqu'il est soumis à une refusion à une température inférieure ou égale à 270°C, engendre moins de 2,5 % en poids de résidus organiques par rapport au poids de la pâte ou crème de soudure.

2. Pâte ou crème de soudure telle que revendiquée dans la revendication 1, dans laquelle le solvant organique polaire est un glycol.

3. Pâte ou crème de soudure telle que revendiquée dans la revendication 1 ou la revendication 2, dans laquelle l'hydrocarbure aliphatique est une huile minérale.

4. Pâte ou crème de soudure telle que revendiquée dans l'une quelconque des revendications précédentes, dans laquelle la fraction en volume de phase continue de l'émulsion se situe dans l'intervalle de 18 à 35 % en volume.

5. Pâte ou crème de soudure telle que revendiquée dans l'une quelconque des revendications précédentes, dans laquelle un activateur est inclus en une quantité d'au plus 7 % en poids.

6. Pâte ou crème de soudure telle que revendiquée dans l'une quelconque des revendications précédentes, dans laquelle le solvant polaire, ou mélange de tels solvants, et l'hydrocarbure aliphatique, ou mélange de tels hydrocarbures, ont chacun une limite inférieure de point d'ébullition de >100°C.

7. Pâte ou crème de soudure telle que revendiquée dans l'une quelconque des revendications précédentes, dans laquelle le véhicule contient 0,2 à 10 % en poids, par rapport à son poids total, d'un ou plusieurs agents émulsionnants.

8. Pâte ou crème de soudure telle que revendiquée dans la revendication 7, dans laquelle l'agent émulsionnant est un éther alkylique de poly(oxyalkylène), un) dérivé aminé d'un polyester oligomère ou un agent tensio-actif polymère.

9. Pâte ou crème de soudure telle que revendiquée dans l'une quelconque des revendications précédentes, dans laquelle le véhicule comprend un co-solvant en une quantité d'au plus 20 % en volume.

10. Pâte ou crème de soudure telle que revendiquée dans l'une quelconque des revendications précédentes, dans laquelle le véhicule comprend un agent épaississant dans la phase continue, en une quantité d'au plus 60 % en poids.

11. Pâte ou crème de soudure telle que revendiquée dans l'une quelconque des revendications précédentes, dans laquelle la poudre de soudure est un alliage d'étain ou de plomb ou de bismuth ou d'argent ou d'indium ou d'antimoine ou de toute combinaison d'entre eux.

12. Pâte ou crème de soudure telle que revendiquée dans l'une quelconque des revendications précédentes, qui présente un étalement inférieur à 10 % par affaissement à chaud à une température inférieure ou égale à 150°C.

13. Pâte ou crème de soudure telle que revendiquée dans l'une quelconque des revendications précédentes, qui présente une variation de viscosité inférieure à 32 % sur l'intervalle de température de 22°C à 32°C.

14. Pâte ou crème de soudure telle que revendiquée dans l'une quelconque des revendications précédentes, qui est stable pendant au moins un mois.

15. Carte à circuit imprimé qui a été fabriquée en utilisant une pâte ou crème de soudure telle que revendiquée dans l'une quelconque des revendications précédentes.
